# EUROPÄISCHE PATENTSCHRIFT

(11) **EP 2 106 605 B1**
(45) Veröffentlichungstag und Bekanntmachung des Hinweises auf die Patenterteilung: **29.08.2012**
(21) Anmeldenummer: 07857942.2
(22) Anmeldetag: 20.12.2007
(51) Int. Cl.: G07F 7/10

(54) **VERFAHREN UND SYSTEM ZUR ERHÖHUNG DER SICHERHEIT BEI DER ERSTELLUNG ELEKTRONISCHER SIGNATUREN MITTELS CHIPKARTE**
METHOD AND SYSTEM FOR INCREASING SECURITY WHEN CREATING ELECTRONIC SIGNATURES USING A CHIP CARD
PROCÉDÉ ET SYSTÈME POUR ACCROÎTRE LA SÉCURITÉ LORS DE LA CRÉATION DE SIGNATURES ÉLECTRONIQUES AU MOYEN D'UNE CARTE À PUCE

(30) Priorität: 29.12.2006 DE 102006062046
(43) Veröffentlichungstag der Anmeldung: 07.10.2009
(73) Patentinhaber: NEC Europe Ltd., 53757 Sankt Augustin (DE)
(72) Erfinder: LO IACONO, Luigi, 53225 Bonn (DE)
(74) Vertreter: Vossius & Partner
(86) Internationale Anmeldenummer: PCT/EP2007/064321
(87) Internationale Veröffentlichungsnummer: WO 2008/080879

(56) Entgegenhaltungen:
- EP-A- 0 980 053
- WO-A-2004/032414
- DE-A1- 19 747 603
- DE-A1- 19 754 101
- DE-A1-102004 046 847

## Beschreibung

Die vorliegende Erfindung betrifft ein Verfahren sowie ein System zur Erhöhung der Sicherheit bei der Erstellung elektronischer Signaturen mittels Chipkarte. Das erfindungsgemäße Verfahren bzw. System sieht insbesondere eine visuelle Verifikation der zu signierenden Daten vor, um eine vertrauenswürdige Signierung zu gewährleisten.

Chipkarten, oft auch als Smartcards oder Integrated Circuit Card (ICC) bezeichnet, sind spezielle Plastikkarten mit eingebautem Chip, der üblicherweise eine Hardware-Logik, Speicher und/oder einen Mikroprozessor aufweist. Chipkarten gibt es in unterschiedlichen Ausführungen.

Speicher-Chipkarten dienen hauptsächlich zur Speicherung von Daten und haben nur eine einfache Logik, wohingegen Prozessor-Chipkarten meist mit eigenem Kartenbetriebssystem ausgestattet sind und oft kryptographische Fähigkeiten haben. Chipkarten mit kryptographischen Fähigkeiten bieten neben der Möglichkeit, private Informationen zu speichern, wie beispielsweise kryptographische Schlüssel, darüber hinaus auch noch kryptographische Algorithmen, so dass die Verschlüsselung bzw. die Erstellung elektronischer Signaturen nur innerhalb der Chipkarte stattfindet und die kryptographischen Schlüssel niemals direkt ausgelesen werden können.

Da die geheimen bzw. privaten Schlüssel auf der Chipkarte gespeichert sind und diese nicht verlassen, ist das Erspähen des Schlüssels nahezu unmöglich, weswegen eine Signaturerzeugung mittels Chipkarte prinzipiell als sehr sicher anzusehen ist. Elektronische Signaturen bieten für Transaktionen über Netzwerke etliche Vorteile, z.B. gewähren sie die Authentizität einer Nachricht Die meisten Mitgliedsstaaten der europäischen Union haben mittlerweile Gesetze bezüglich elektronischer Signaturen verabschiedet und erfüllen somit die Anforderungen der EU-Richtlinie 1999/93/EC. In Deutschland und Europa ist die elektronische Signatur weitgehend mit der handschriftlichen Unterschrift gleichgestellt. Aufgrund des hohen Sicherheitsniveau das Chipkarten zur Erzeugung von elektronischen Signaturen bieten, sind diese im Deutsche Signaturgesetz (SigG) bzw. der Signaturverordnung (SigV) als sog. Signaturerstellungseinheiten zur Erzeugung des elektronischen Pendant der handschriftlichen Unterschrift vorgeschrieben.

Da Chipkarten meist weder Energieversorgung noch Tastatur oder Display aufweisen wird stets ein Lese-/Schreibgerät sowie ein Terminal zur Darstellung der Daten und Interaktion mit einer Chipkarte benötigt. Daraus folgt, dass zum Signieren und Darstellen digitaler Dokumente stets Daten zwischen dem Terminal und der Chipkarten übermittelt werden müssen. Ein Unterzeichner muss sich daher auf eine vertrauenswürdige Übermittlung und einer vertrauenswürdige Darstellung der Daten verlassen können, um sicher zu sein, dass es sich bei den im Terminal-Display dargestellten Daten um die Daten handelt, die er mit seiner Chipkarte signieren will, d.h. ein Benutzer möchte unterzeichnen was er sieht (WYSIWYS - "What You See Is What You Sign"). Die Datenkommunikation zwischen Terminal und Chipkarte sowie die Darstellung der zu signierenden Daten auf dem Terminal-Display birgt jedoch ein potentielles Risiko, das häufig als "Terminal Problem" bezeichnet wird und im Folgenden kurz diskutiert wird.

Häufig dienen Personal Computer (PCs) als Terminals, wobei der Computerbildschirm als Terminal-Display dient. Ein Benutzer bzw. Unterzeichner kann sich bei Terminals dieser Art nicht sicher sein, ob es sich bei den auf dem Computerbildschirm dargestellten Daten wirklich um die Daten handelt, die er signieren möchte. So kann beispielsweise bösartige Software (Schadprogramme bzw. Maleware; z.B. ein "Trojaner") auf dem PC vorhanden sein, wobei die Malware die Daten auf dem PC verändert oder ersetzt, so dass ein Benutzer zwar die Daten auf dem Computerbildschirm dargestellt bekommt, die er unterzeichnen möchte, letztendlich aber Daten unterzeichnet werden, die nicht auf dem Computerbildschirm dargestellt werden. Das folgende Beispiel soll dies weiter verdeutlichen.

Angenommen ein Benutzer möchte einen Überweisungsauftrag auf seinem privaten PC Zuhause ausführen, wobei der PC mit Malware infiziert ist, ohne dass es der Benutzer weiß. Die Malware kann die zu unterzeichnenden Daten abfangen und durch einen veränderten Überweisungsauftrag ersetzen, beispielsweise eine Überweisung auf ein ausländisches Nummernkonto. Die Malware zeigt anstelle der betrügerischen Überweisung auf das ausländische Nummernkonto jedoch eine Fehlermeldung auf dem Computerbildschirm an, so dass der Benutzer nicht erkennen kann, dass er bereits die Überweisung auf das ausländische Nummernkonto signiert und somit angewiesen/autorisiert/akzeptiert hat.

Im Stand der Technik werden mehrere mögliche Verfahren und Systeme vorgeschlagen, um solch einen Missbrauch zu verhindern. Beispielsweise könnten speziell für eine Aufgabe spezifizierte Terminals mit eigenem Terminal-Display verhindern, dass sich irgendwelche Malware auf dem Terminal einnisten kann. Dies hat jedoch den Nachteil, dass derartige Terminals nur einen bestimmten Zweck erfüllen und dementsprechend teuer sind.

Es ist daher wünschenswert, PCs als Terminals mit Display zu verwenden, die flexibel und kostengünstig sind, wobei eine durch Malware initiierte betrügerische Handlung durch zusätzliche Sicherheitsmaßnahmen verhindert werden kann.

So betrifft die DE 199 23 807 ein Verfahren zur Erhöhung der Sicherheit bei digitalen Signaturen bzw. Unterschriften, wobei das Verfahren im Wesentlichen auf der kryptographischen Kopplung zwischen einem externen Anzeigegerät und der Chipkarte beruht. Zwischen dem Anzeigegerät und der Chipkarte werden die Daten hierzu auf einem verschlüsselten Kommunikationskanal übertragen. Insbesondere kennt die Chipkarte den öffentlichen Schlüssel des Anzeigegeräts und das Anzeigegerät kennt den öffentlichen Schlüssel der Chipkarte. Dieses Verfahren bietet allerdings keinen wirksamen Schutz gegen Schadprogramme wie Trojaner. Wenn sich diese auf dem PC eingenistet haben, können diese den sicheren Kanal zwischen PC und Chipkarte außer Kraft setzen, da derartige Schadprogramme auf dem PC nahezu alles manipulieren können und insbesondere auf das Schlüsselmaterial, das dort zum Aufbau des geschützten Kanals hinterlegt ist, zugreifen können.

Das erfindungsgemäße Verfahren zur Erhöhung der Datensicherheit basiert auf der Verwendung von Chipkarten mit integrierter Anzeige (Display). Die Erfindung betrifft ein Verfahren, mit dem ein Benutzer mit Sicherheit die Daten dargestellt bekommt, die er mit seiner Chipkarte beispielsweise in einer potenziell unsicheren und nicht-vertrauenswürdigen Umgebung wirklich signiert, d.h. der Benutzer signiert die Daten die er auf der Anzeige der Chipkarte wirklich sieht (echtes "WYSIWYS"). Dies wird erfindungsgemäß dadurch erreicht, dass als vertrauenswürdige Anzeige zum Überprüfen der zu unterzeichnenden Daten, die Anzeige auf der Chipkarte verwendet wird. Mit anderen Worten, die mit der Chipkarte zu unterzeichnenden Daten werden direkt von der Anzeige auf der Chipkarte dargestellt. Da die Chipkarte selbst die Anzeige direkt ansteuert, und sich keine Malware auf der Chipkarte einnisten kann, handelt es sich bei der Chipkarten-Anzeige um eine vertrauenswürdige Anzeige.

Die Anzeige auf der Chipkarte kann aufgrund ihrer sehr geringen Größe, vorgegeben durch die Chipkartengröße, nur relativ wenige Informationen anzeigen, insbesondere kann die Anzeige meistens nicht alle zu signierenden Daten gleichzeitig anzeigen. Erfindungsgemäß werden daher die zu signierenden Daten - falls erforderlich - auf wesentliche spezifische Daten reduziert, und nur diese reduzierten wesentlichen Daten auf der Anzeige dargestellt. Dieser erfindungsgemäße Ansatz basiert auf der Beobachtung, dass wenn einige wesentliche Daten nicht durch einen Angreifer unbemerkt manipuliert werden können - eine Manipulation wird vom rechtmäßigen Benutzer auf der vertrauenswürdigen Anzeige der Chipkarte erkannt -, besteht die Grundlage und Motivation für einen Angriff nicht mehr. Anschaulich verdeutlichen lässt sich dies erneut am Beispiel der Banküberweisung. Hier können als wesentliche Daten der Überweisungsempfänger sowie der Überweisungsbetrag angesehen werden. Ist ein Angreifer nicht mehr in der Lage, diese Daten zu seinen Gunsten unerkannt zu verändern, besteht für den Angreifer keine Motivation mehr. Welche Daten auf der Anzeige dargestellt werden, und wie diese Daten von der Chipkarte selektiert werden, ist von dem jeweiligen Applikationskontext abhängig.

Die DE 10 2004 046847 beschreibt ein System, ein Verfahren und einen tragbaren Datenträger zur Erzeugung einer digitalen Signatur und dabei insbesondere die Absicherung einer von einem Benutzer freigegebenen Signaturerzeugung mittels des tragbaren Datenträgers. Dabei wird eine Chipkarte für Signaturzwecke verwendet, die eine Anzeige aufweisen kann. Der hierbei eingesetzte Computer, der potentiell unsicher sein kann, übernimmt wesentliche Aufgaben des bekannten Signaturverfahrens. Insbesondere definiert ein Benutzer durch Eingaben auf dem Computer Daten, die er signieren möchte. Zudem bestimmt der Computer aus den Transaktionsdaten einen Hashwert, welcher von der Chipkarte signiert werden soll. Bei diesem bekannten System werden dem Server wesentliche Transaktionsschritte zugeschrieben, wobei der Server aus den Transaktionsdaten ebenfalls einen Hashwert und zusätzlich Anzeigedaten zur Anzeige für den Benutzer bestimmt. Zudem sind weitere Schritte zur Verifikation der Server-Signatur sowie ein weiterer Schritt zum Vergleichen der Hashwerte auf der Chipkarte notwendig. Dieses bekannte Verfahren erfordert Modifikationen bestehender Signaturprozesse sowohl auf der Anwenderseite als auch auf der Serverseite.

Die WO 2004/032414 beschreibt eine digitale Datensignierung mit einer Chipkarte mit integrierter Anzeige. Das Markieren und Selektieren wesentlicher Daten aus den zu signierenden Daten mittels einer Selektionseinrichtung und anschließendes Darstellen der selektierten Daten auf der Anzeige der Chipkarte ist dabei nicht vorgesehen.

Es ist eine Aufgabe der vorliegenden Erfindung ein Verfahren, eine Chipkarte sowie ein System zur Erhöhung der Sicherheit bei der Erzeugung elektronischer Signaturen mittels Chipkarten bereitzustellen und bevorzugt die oben beschriebenen Nachteile des Standes der Technik zu überwinden.

Die Aufgabe der vorliegenden Erfindung wird durch die unabhängigen Patentansprüche gelöst. Die abhängigen Patentansprüche beschreiben weitere bevorzugte Ausführungsformen und Abwandlungen der vorliegenden Erfindung.

Im Folgenden werden die Begriffe digitale bzw. elektronische Signatur bzw. elektronische Unterschrift synonym verwendet, wobei verstärkt auf die Definitionen und Begrifflichkeiten des Deutschen Signaturgesetzes (SigG) abgestellt wird. Hier wird der Begriff "elektronische Signatur" verwendet und es werden drei Signaturtypen unterschieden. Relevant für das erfindungsgemäße Verfahren und System sind dabei im Wesentlichen die Signaturrypen, die auf mathematischen bzw. kryptographischen Verfahren oder Algorithmen beruhen und insbesondere die sog. "Qualifizierte Signatur", von der Rechtswirkung ausgeht.

Weiterhin steht der Begriff der "wesentlichen Daten" für die Daten, die für den Signaturprozess besonders wichtig sind. D.h. die wesentlichen Daten sind Teildaten der zu signierenden Daten, die besonders geeignet sind, die zu signierenden Daten prägnant zu charakterisieren. Es ist dabei zu beachten, dass der Begriff "Teil"daten nicht auf einen Teil beschränkt ist, sondern auch die gesamten zu signierenden Daten als Teildaten ausgewählt werden können, insbesondere wenn es sich bei den zu signierenden Daten um relativ wenig Daten handelt, die von der integrierten Chipkarten-Anzeige dargestellt werden können. Bei einer Banküberweisung können als wesentliche charakteristische Daten beispielsweise die Kontonummer, Bankleitzahl und der Betrag ausgewählt werden. Weitere den Überweisungsprozess beschreibende Daten, wie beispielsweise ein Betreff können bei der Selektion der wesentlichen charakteristischen Daten unberücksichtigt bleiben, d.h. diese Daten sind nicht wesentlich sonder nur als ergänzend anzusehen. Mit anderen Worten, als wesentliche Daten sind Daten anzusehen, die ausschlaggebend, bzw. bedeutsam bzw. spezifisch für den Signaturprozess sind.

Im Folgenden werden zwei bevorzugte Ausführungsformen des erfindungsgemäßen Verfahrens näher beschrieben.

Gemäß einer ersten erfindungsgemäßen Ausführungsform wird eine Chipkarte nur zu einem einzigen festgelegten Zweck verwendet (z.B. Bankgeschäfte). Die Datenformate sind dadurch systemspezifisch festgelegt und damit auch die wesentlichen Daten, die von der Chipkarte angezeigt werden. Die (reduzierten) wesentlichen Daten könnten hierbei die Kontonummer, Bankleitzahl und der Betrag sein.

Gemäß einer zweiten bevorzugten Ausführungsform ist die Chipkarte vielseitig für mehrere Zwecke verwendbar, z.B. für Bankgeschäfte, als Ersatz der handschriftlichen Unterschrift usw. Die wesentlichen Merkmale der Daten sind dadurch für unterschiedliche Anwendungen der Chipkarte unterschiedlich definiert In dieser zweiten erfindungsgemäßen Ausführungsform werden die wesentlichen Daten der zu signierenden Daten, die von der Anzeige der Chipkarte dargestellt werden sollen, je nach Anwendung markiert und selektiert. Die Markierung bzw. Selektion kann automatisch oder von einem Benutzer durchgeführt werden.

In beiden Fällen ist eine Verarbeitungseinrichtung bzw. Selektionseinrichtung auf der Chipkarte vorgesehen, beispielsweise in Form von Hard- bzw. Software, um die relevanten bzw. wesentlichen Daten aus dem zu signierenden Datenstrom zu filtern und auf der Anzeige der Chipkarte darzustellen.

Gemäß der zweiten Ausführungsform wird dabei eine bestimmte Abfolge und Verfahrensweise eingehalten, damit die Signaturerzeugung korrekt und gemäß Signaturstandards erfolgt und damit die von der Chipkarte erzeugte Signatur auch außerhalb der Chipkarte von bereits verbreiteten Signaturverifikationskomponenten verifiziert werden kann.

Das erfindungsgemäße Verfahren und System hat den Vorteil, dass die Signaturfreigabe, beispielsweise durch Eingabe einer Signatur-PIN, erst nach einer visuellen Verifikation der angezeigten wesentlichen Daten erfolgt.

Die vorliegende Erfindung betrifft auch eine Chipkarte zum Ausführen des erfindungsgemäßen verbesserten Verfahren zur Erhöhung der Sicherheit bei der Erstellung elektronischer Signaturen bzw. bei der digitalen Signierung von Daten. Die erfindungsgemäße Chipkarte kann als eine kontaktbehaftete Chipkarte oder als kontaktlose Chipkarte oder als Chipkarte ausgebildet sein, die sowohl über eine kontaktbehaftete als auch über eine kontaktlose Schnittstelle angesprochen werden kann.

Die erfindungsgemäße Chipkarte weist eine in bzw. auf der Chipkarte integrierte Anzeige auf, die möglichst groß gestaltet ist, um möglichst viele Informationen gleichzeitig darstellen zu können. Die Anzeige kann auf der Vorderseite und/oder auf der Rückseite vorgesehen sein. Bei kontaktbehafteten Chipkarten, bei denen die typischen Goldkontakte des Chipkartenmoduls auf der Vorderseite angeordnet sind, kann auf der Rückseite eine größere Anzeige angebracht sein. Die Anzeige kann beispielsweise auf einer organischen Anzeigetechnologie oder einer Kunststofftechnologie basieren. Es sind alle Anzeigen geeignet, die klein genug sind, um auf/in einer Chipkarte angebracht werden zu können. Die Erhöhung der Sicherheit wird insbesondere dadurch erreicht, dass die einzige Schnittstelle zu der Anzeige mit dem Mikroprozessor der Chipkarte angesprochen wird. Daher werden nur Daten angezeigt, die von dem Mikroprozessor auf der Chipkarte verarbeitet werden. Demzufolge ist die auf/in der Chipkarte integrierte Anzeige eine vertrauenswürdige Anzeige.

Vorzugsweise weist die erfindungsgemäße Chipkarte Kontroll- bzw. Steuerelemente auf, wie beispielsweise Bildlauftasten (Scroll buttons) oder ein Bildlauffeld (Scroll pad). Die Steuerelemente ermöglichen es einem Benutzer, in den auf der Anzeige dargestellten Daten bzw. Information zu blättern.

Die vorliegende Erfindung betrifft auch ein System zur Erhöhung der Sicherheit beim digitalen Signieren von Daten. Das erfindungsgemäße System umfasst vorzugsweise eine erfindungsgemäße Chipkarte und ein dafür angepasstes Lese-/Schreibgerät, vorzugsweise mit Terminal und Terminal-Anzeige bzw. Terminal-Display. Ein erfindungsgemäßes Chipkarten Lese-/Schreibgerät ist vorzugsweise dergestalt, dass die Anzeige auf der Chipkarte auch während des Kommunikationsvorgangs zwischen Lese-/Schreibgerät und Chipkarte sichtbar bleibt. Bei kontaktbehafteten Chipkarten kann dies dadurch erreicht werden, dass Teile des Lese-/Schreibgeräts transparent gestaltet sind, sodass die darunter liegende Anzeige auch dann noch sichtbar bleibt, wenn das Lesegerät mit den Kontakten der Chipkarte verbunden ist. Gemäß einer weiteren Ausführung kann das Lese-/Schreibgerät auch eine Aussparung aufweisen, die bei einer in das Lese-/Schreibgerät eingeführten Chipkarte den Blick auf die Anzeige der Chipkarte ermöglicht

Aufgrund der relativ kleinen Anzeige auf der Chipkarte kann nur eine begrenzte Menge von Daten bzw. Informationen darauf dargestellt werden. Ein wesentlicher Aspekt der vorliegenden Erfindung liegt daher in einer intelligenten Datenselektion, d.h. es wird von einer großen Menge von Informationsdaten ein kleiner Teil ausgewählt, der dennoch ausreicht, alle wichtigen Aspekte der zu unterzeichnenden Daten für einen Benutzer zu visualisieren. Bei den ausgewählten bzw. selektierten Daten handelt es sich vorzugsweise um wesentliche Teile der zu signierenden Daten. Gemäß einer Ausführungsform kann ein Benutzer selbst die ihm als wesentlich erscheinenden Daten selektieren. Gemäß einer weiteren bevorzugten Ausführungsform wird die Selektion der wesentlichen Daten automatisch ausgeführt. Dies ist besonders vorteilhaft, wenn es sich bei der Chipkarte um eine Chipkarte handelt, die speziell für einen einzigen bestimmten Prozess vorgesehen ist, z.B. Bankgeschäfte. Da für diesen bestimmten Prozess die wesentlichen Daten bereits vordefiniert sind, können diese vordefinierten wesentlichen Daten automatisch selektiert werden und anschließend auf der Anzeige der Chipkarte dargestellt werden.

Vorzugsweise basiert die Selektion auf einer Datenmarkierung, d.h. die markierten Daten werden selektiert und auf der Anzeige der Chipkarte dargestellt. Die Markierung, d.h. die Grundlage der Selektierung erfolgt vorzugsweise mittels vordefinierter Marker, vorzugsweise textbasierte Marker. Insbesondere sind textbasierende Struktursprachen bevorzugt wie beispielsweise XML.

Im Folgenden wird eine bevorzugte Ausführungsform der vorliegenden Erfindung unter Bezugnahme auf die Figur(en) ausführlich beschrieben. Es zeigen:

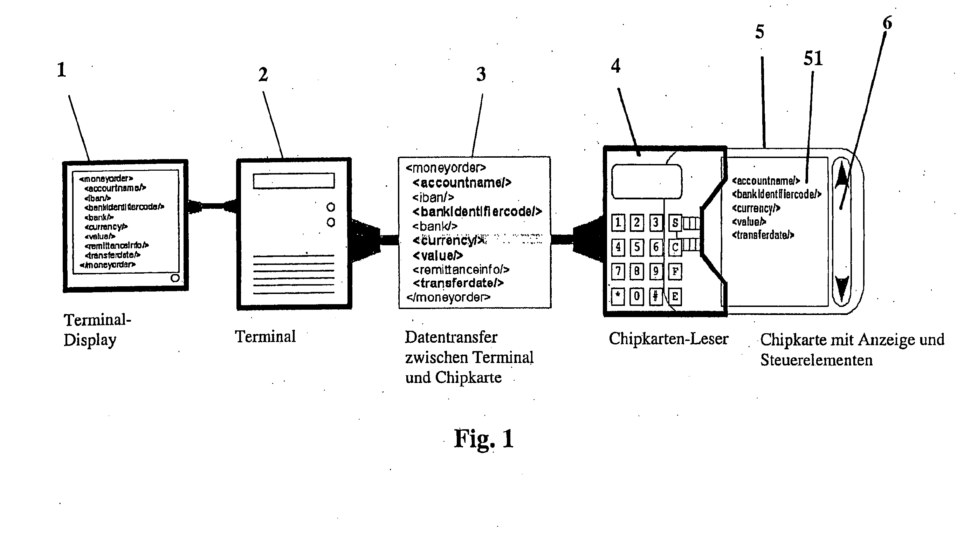

Fig. 1 ein erfindungsgemäßes System zur Durchführung des erfindungsgemäßen Signaturprozesses.

Anhand von Figur 1 wird der oben bereits im Stand der Technik angesprochene Banküberweisungsvorgang beschrieben, diesmal jedoch unter Verwendung des erfindungsgemäßen Verfahrens. Bei einer Banküberweisung können als die wesentlichen Daten beispielsweise der Empfänger, Kontonummer, Bankleitzahl, Betrag und das Datum ausgewählt bzw. angesehen werden. Die auf der Chipkarte integrierte Anzeige 5 muss somit nicht alle Daten darstellen, die zur Durchführung des Überweisungsvorgangs notwendig sind, sondern es reichen die wesentlichen Daten aus, die einem Benutzer den Überweisungsvorgang hinreichend genau charakterisieren. Anhand dieser wesentlichen Daten kann ein Benutzer somit verifizieren, dass der richtige Betrag an die richtige Person zum gewünschten Zeitpunkt überwiesen wird. Ein Benutzer kann daher nach einer visuellen Kontrolle der für ihn wesentlichen Daten die Überweisung signieren, d.h. freigeben/anweisen. Falls aus irgendwelchen Gründen eine Manipulation an den Daten vorgenommen wird, beispielsweise durch eine Malware im Terminal, so werden gemäß dem erfindungsgemäßen Verfahren diese manipulierten Daten auf der Anzeige 5 dargestellt Ein Benutzer wird dies erkennen und die manipulierten Daten dementsprechend nicht signieren.

In dem in Figur 1 beispielhaft dargestellten Überweisungsvorgang wird ein Terminal 2 und ein Terminal-Display 1 bereitgestellt. Dies kann beispielsweise in einer Bank oder an einem Bahnhof geschehen, oder der heimische PC dient als Terminal 2 und der Computerbildschirm dient als Terminal-Display 1. Weiterhin wird zum Auslesen der Chipkate 5 ein Chipkarten-Lese-/Schreibgerät 4 bereitgestellt. Ein Benutzer führt nun die Chipkarte 5 in das Lese-/Schreibgerät 4 ein. Hierbei reicht es, wenn nur der vordere Teil der Chipkarte 5 mit den typischen Goldkontakten in das Lese-/Schreibgerät 4 eingeführt wird, um eine Kommunikation zwischen Lese-/Schreibgerät und Chipkarte herzustellen. Der hintere Teil der Chipkarte weist eine Anzeige 51 auf, die sichtbar bleibt, auch wenn die Chipkarte in Kommunikationsverbindung mit dem Lese-/Schreibgerät ist.

Ein Benutzer startet seinen Überweisungsvorgang, wobei auf dem Terminal-Display detailliert Daten des Überweisungsvorgangs dargestellt sind. Zudem werden gemäß des erfindungsgemäßen Verfahrens Daten zu der Chipkarte transferiert 3 und ein kryptographischer Hashwert mittels einer kryptographischen Hash-Funktion über die Eingabedaten berechnet. Ein Hashwert ist ein skalarer Wert fester, kurzer Länge, der aus Eingabedaten beliebiger Länge berechnet wird und manchmal auch als Fingerprint der Nachricht bezeichnet wird, da der Hashwert aufgrund der Eigenschaften kryptographischer Hash-Funktionen die Nachricht eindeutig identifiziert.

Nachdem der Benutzer sich als berechtigter Benutzer für die Chipkarte authentifiziert hat, beispielsweise durch Eingabe einer Persönlichen Identifikationsnummer (PIN) oder durch Scannen eines biometrischen Merkmals, wird die elektronische Signatur (über den Hashwert) auf der Chipkarte berechnet. Diese elektronische Signatur wird vom Chipkarten-Leser 4 zum Terminal 2 zurückgesendet.

Falls alle Daten auf der Chipkartenanzeige 51 dargestellt werden sollen, wird keine bzw. der gesamte Datensatz markiert und auf der Anzeige der Chipkarte dargestellt.

Falls nur ein wesentlicher Teil der zu signierenden Daten dargestellt werden soll, wird von dem Prozessor auf der Chipkarte 5 in dem Datensatz nach Markierungen gesucht, und entsprechend den Markierungen werden die wesentlichen Daten selektiert. Nicht markierte Daten werden der Hashfunktion direkt zugeführt und nicht auf der Anzeige der Chipkarte 51 dargestellt. Wenn ein markierter Teil innerhalb des Datensatzes gefunden wird, wird die Markierung (beispielsweise <moneyorder> oder <iban>) entfernt und die markierten Daten werden selektiert, um auf der Anzeige dargestellt zu werden und ohne der Markierung der Hashfunktion zugeführt. Mit anderen Worten, der Hashwert, der letztendlich signiert wird, basiert auf den Daten ohne Markierungstext. Das erfindungsgemäße Verfahren gewährleistet in diesem Zusammenhang insbesondere die Reihenfolge, in der die Daten in die Hashfunktion eingespeist werden, um die Kompatibilität mit Standard Signaturverifikationskomponenten zu bewahren und unterstützen.

Das erfindungsgemäße Verfahren kann selbstverständlich auch auf andere zu signierende Prozesse angewendet werden. So können beispielsweise bei einem Vertrag zwischen zwei Parteien nur die wesentlichen Daten dargestellt werden, wie beispielsweise die Namen der Vertragspartner, der Titel des Vertrags, das Datum und vielleicht wichtige Formulierungen des Vertrags.

## Patentansprüche

1. Verfahren zur Erhöhung der Sicherheit bei der Erstellung elektronischer Signaturen mit einer Chipkarte (5) mit den Schritten:
a) Bereitstellen einer Chipkarte (5) mit integrierter Anzeige (51),
b) Bereitstellen eines Terminals (2) und eines Chipkarten-Lese- bzw. Schreibgerätes (4) zur Übertragung von zu signierenden Daten von der Chipkarte (5) zum Terminal (2) bzw. von dem Terminal zur Chipkarte,
c) Herstellen einer Datenübertragung zwischen der Chipkarte (5) und dem Terminal (2), wobei während der Datenübertragung zwischen dem Terminal (2) und der Chipkarte (5) die Anzeige (51) im Wesentlichen für einen Benutzer sichtbar ist,
d) Initiieren eines Signaturprozesses,
e) Übertragen der zu signierenden Daten an die Chipkarte (5), in denen wesentliche Daten durch Markierungen gekennzeichnet sind ,
f) automatisches Selektieren der wesentlichen Daten aus den zu signierenden Daten auf der Basis der Markierungen mittels einer Selektionseinrichtung auf der Chipkarte,
g) Darstellen der selektierten Daten auf der Anzeige (51) der Chipkarte und
h) Signieren der zu signierenden Daten, wobei die Signatur von der Chipkarte (5) an das Terminal (2) übermittelt wird.

2. Verfahren nach Anspruch 1, wobei basierend auf den zu signierenden Daten ein Hashwert gebildet wird, der signiert wird.

3. Verfahren nach Anspruch 2, wobei der Hashwert auf den zu signierenden Daten ohne die Markierungen basiert.

4. Verfahren nach Anspruch 3, wobei die Markierungen zur Bildung des Hashwertes entfernt werden.

5. Verfahren nach einem der vorhergehenden Ansprüche, wobei der Schritt des Markierens und/oder Selektierens automatisch für einen vorbestimmten Signaturprozess erfolgt.

6. Verfahren nach einem der Ansprüche 1 bis 5, wobei zwischen dem Schritt des Initiierens und des Selektierens der Schritt des Scannens der transferierten Daten nach Markierungen ausgeführt wird, und das Selektieren auf den Makrierungen basiert.

7. Verfahren nach Anspruch 6, wobei die Markierungen auf einer textbasierenden Strukturierungssprache, wie beispielsweise XML, basieren.

8. Chipkarte (5) mit integrierter Anzeige (51) zur Erhöhung der Sicherheit bei der Erstellung elektronischer Signaturen, wobei die Chipkarte (5) dazu angepasst ist, Daten mittels eines Verfahrens nach einem der vorhergehenden Ansprüche zu signieren.

9. Chipkarte nach Anspruch 8, wobei die Selektionseinrichtung die wesentlichen Daten basierend auf Markierungen selektiert.

10. Chipkarte nach Anspruch 8 oder 9, wobei die Chipkarte zusätzlich Kontrollelemente (6) aufweist, mit denen der Bildlauf der Anzeige (51) auf der Chipkarte (5) gesteuert werden kann.

11. System zur Erhöhung der Sicherheit bei der Erstellung elektronischer Signaturen mit:
a) einer Chipkarte (5) nach einem der Ansprüche 8 bis 10 und
b) einem Chipkarten-Lese-/Schreibgerät (4) gestaltet, dass während einer Datenübertragung zwischen Chipkarten-Lese-/Schreibgerät (4) und Chipkarte (5) die Anzeige (51) der Chipkarte (5) zumindest teilweise sichtbar ist.

## Claims

1. A method for increasing security in the creation of electronic signatures with a chip card (5) comprising the steps of:
a) providing a chip card (5) with integrated display (51),
b) providing a terminal (2) and a chip card reader/writer (4) for transmitting data to be signed from the chip card (5) to the terminal (2) and from the terminal to the chip card, respectively,
c) establishing data communication between the chip card (5) and the terminal (2), with the display (51) being substantially visible to a user during data communication between the terminal (2) and the chip card (5),
d) initiating a signature process,
e) transmitting to the chip card (5) the data to be signed wherein essential data are **characterized by** marks,
f) automatically selecting the essential data from the data to be signed on the basis of the marks by means of a selection means on the chip card,
g) representing the selected data on the display (51) of the chip card, and
h) signing the data to be signed, with the signature being transmitted from the chip card (5) to the terminal (2).

2. The method according to claim 1, wherein, based on the data to be signed, a hash value is formed which is signed.

3. The method according to claim 2, wherein the hash value is based on the data to be signed without the marks.

4. The method according to claim 3, wherein the marks are removed for forming the hash value.

5. The method according to any of the preceding claims, wherein the step of marking and/or selecting is performed automatically for a predetermined signature process.

6. The method according to any one of claims 1 to 5, wherein the step of scanning the transferred data for marks is performed between the step of initiating and the step of selecting, and the selection is based on the marks.

7. The method according to claim 6, wherein the marks are based on a text-based structural language, such as XML.

8. A chip card (5) with integrated display (51) for increasing security in the creation of electronic signatures, wherein the chip card (5) is adapted to sign data by means of the method according to any of the preceding claims..

9. The chip card according to claim 8, wherein the selection means selects the essential data based on the marks.

10. The chip card according to claim 8 or 9, wherein the chip card further comprises control elements (6) with which it is possible to control the scrolling of the display (51) on the chip card (5).

11. A system for increasing security in the creation of electronic signatures with:
a) a chip card (5) according to any one of claims 8 to 10, and
b) a chip card reader/writer (4) which is designed such that during data communication between chip card reader/writer (4) and chip card (5), the display (51) of the chip card (5) is at least partially visible.

## Revendications

1. Procédé pour accroître la sécurité lors de la création de signatures électroniques au moyen d'une carte à puce (5) comportant les étapes suivantes :
a) la fourniture d'une carte à puce (5) avec affichage intégré (51),
b) la fourniture d'un terminal (2) et d'un appareil de lecture de carte à puce ou d'écriture sur carte à puce (4) pour de la transmission de données à authentifier de la carte à puce (5) au terminal (2) ou bien du terminal à la carte à puce,
c) l'établissement d'une transmission de données entre la carte à puce (5) et le terminal (2), sachant que, pendant la transmission de données entre le terminal (2) et la carte à puce (5), l'affichage (51) est sensiblement visible pour un utilisateur,
d) le lancement d'un processus de signature,
e) la transmission des données à authentifier à la carte à puce (5), données parmi lesquelles les données principales sont identifiées par des marquages,
f) la sélection automatique des données principales dans les données à authentifier sur la base des marquages au moyen d'un dispositif de sélection se trouvant sur la carte à puce,
g) la représentation des données sélectionnées sur l'affichage (51) de la carte à puce et
h) l'authentification des données à authentifier, moyennant quoi la signature est transmise de la carte à puce (5) au terminal (2).

2. Procédé selon la revendication 1, dans lequel on calcule, sur la base des données à authentifier, une valeur Hash qui est authentifiée.

3. Procédé selon la revendication 2, dans lequel la valeur Hash est fondée sur les données à authentifier sans les marquages.

4. Procédé selon la revendication 3, dans lequel les marquages sont supprimés pour le calcul de la valeur Hash.

5. Procédé selon l'une quelconque des revendications précédentes, dans lequel l'étape de marquage et/ou de sélection se fait de manière automatique pour un processus d'authentification prédéterminé.

6. Procédé selon l'une quelconque des revendications 1 à 5, dans lequel entre l'étape de lancement et de sélection, on procède à l'étape de numérisation des données transférées selon marquages et dans lequel la sélection repose sur les marquages.

7. Procédé selon la revendication 6, dans lequel les marquages sont fondés sur un langage de structuration basé texte, telle que XML, par exemple.

8. Carte à puce (5) avec affichage intégré (51) pour l'accroissement de la sécurité lors de la création de signatures électroniques, sachant que la carte à puce (5) est adaptée de manière à authentifier des données au moyen d'un procédé selon l'une quelconque des revendications précédentes.

9. Carte à puce selon la revendication 8, dans laquelle le dispositif de sélection sélectionne les données principales sur la base de marquages.

10. Carte à puce selon la revendication 8 ou 9, dans laquelle la carte à puce comporte en outre des éléments de commande (6) permettant de commander le défilement de l'affichage (51) sur la carte à puce (5) .

11. Système pour accroître la sécurité lors de la création de signatures électroniques comportant :
a) une carte à puce (5) selon l'une quelconque des revendications 8 à 10 et
b) un appareil de lecture de carte à puce/d'écriture sur carte à puce (4) permettant que, pendant une transmission de données entre un appareil de lecture de carte à puce/d'écriture sur carte à puce (4) et une carte à puce (5), l'affichage (51) de la carte à puce (5) soit au moins partiellement visible.
